# EUROPÄISCHE PATENTSCHRIFT

(11) **EP 3 033 781 B1**
(45) Veröffentlichungstag und Bekanntmachung des Hinweises auf die Patenterteilung: **10.10.2018**
(21) Anmeldenummer: 14749841.4
(22) Anmeldetag: 08.08.2014
(51) Int. Cl.: H01M 2/10

(54) **HALTERUNG MINDESTENS EINER BATTERIEZELLE**
HOLDER FOR BATTERY CELLS
CROCHET POUR BATTERIES

(30) Priorität: 14.08.2013 DE 102013216070
(43) Veröffentlichungstag der Anmeldung: 22.06.2016
(73) Patentinhaber: Robert Bosch GmbH, 70442 Stuttgart (DE)
(72) Erfinder: REIMER, Eduard, 70374 Stuttgart (DE); MUELLER, Carsten, 70469 Stuttgart (DE)
(86) Internationale Anmeldenummer: PCT/EP2014/067133
(87) Internationale Veröffentlichungsnummer: WO 2015/022279

(56) Entgegenhaltungen:
- EP-A2- 1 505 670
- CN-U- 201 998 780
- FR-A3- 2 691 292
- US-A1- 2004 144 908
- US-A1- 2011 104 556

## Beschreibung

### Stand der Technik

Die Erfindung geht aus von einer Halterung mindestens einer Batteriezelle umfassend mindestens zwei Halterungselemente.

Aus dem Stand der Technik sind verschweißte Halterungen bekannt, die Batteriezellen unter einem hohen Anpressdruck in einem Batteriemodul zusammenhalten.

### Offenbarung der Erfindung

Die Druckschrift EP 1 505 670 A2 offenbart eine Batterieanordnung mit einer Vielzahl von Zellen, die parallel zueinander positioniert sind. Zwei Sammelschienen sind über alle ersten Terminals und alle zweiten Terminals positioniert. Jede der Sammelschienen enthält Schlitze, durch die sich die Terminals erstrecken und über die Stromschiene gebogen werden können. Diese Batterieanordnung ermöglicht die Verbindung von mehr als drei Zellen miteinander und verbessert den Luftstrom durch die Batterieanordnung.

Die Druckschrift FR 2 691 292 A3 offenbart ein Sicherheitsgehäuse mit einer rechteckigen Basis (1), die eine umlaufende Nut (17) hat, in die die unteren Kanten der Seitenwände (2, 3, 4, 5) passen, wobei Öffnungen (13-16) vorgesehen sind, um das Befestigen des Sicherheitsgehäuse zu ermöglichen.

Öffnungen (11, 12) an der Oberseite einer langen Seite ermöglichen den Durchlass der Batterie-Terminals.

Nachteilig an dem bekannten Stand der Technik ist, dass zur Herstellung eines Batteriemoduls die Batteriezellen mittels eines hohen Anpressdrucks zusammengedrückt werden müssen, wodurch keine exakte Positionierung der Batteriezellen möglich ist, beispielsweise um eine gleichmäßige Wärmeabfuhr der Batteriezellen zu ermöglichen, und wodurch aufgrund von Fertigungstoleranzen keine formschlüssige Verbindung zwischen der Halterung und den Batteriezellen möglich ist.

### Vorteile der Erfindung

Die erfindungsgemäße Vorgehensweise mit den kennzeichnenden Merkmalen der unabhängigen Ansprüche weist demgegenüber den Vorteil auf, dass eine Halterung mindestens einer Batteriezelle mittels mindestens zwei Halterungselementen hergestellt wird, wodurch eine exakte Positionierung mindestens einer Batteriezelle und eine formschlüssige Verbindung zwischen der Halterung und der Batteriezelle möglich ist.

Die Halterung der mindestens einen Batteriezelle umfasst mindestens zwei Halterungselemente, wobei jedes Halterungselement mindestens ein Befestigungsmittel umfasst und vorteilhafterweise die mindestens zwei Halterungselemente mittels der Befestigungsmittel mechanisch lösbar verbunden sind, wobei erste Befestigungsmittel eine s-förmige Führungsschiene aufweisen, die einer invertierten Form, insbesondere einer im Wesentlichen s-förmigen Nut, zweiter Befestigungsmittel entsprechen, wobei die Verbindung zwischen den

Halterungselementen und der Batteriezelle formschlüssig ist, wobei die Halterung Stirnflächen und Seitenflächen der mindestens einen Batteriezelle im Wesentlichen vollständig umschließt.

Vorteilhafterweise weist ein Befestigungsmittel eines ersten Halterungselements eine Form auf, die einer invertierten Form eines Befestigungsmittels eines zweiten Halterungselements entspricht. Durch Variieren einer Größe der Form bzw. der invertierten Form wird vorteilhafterweise die Haftreibung zwischen den Formen festgelegt, beispielsweise wird mit einem geringen Abstand zwischen den Formen eine besonders rüttelfeste Verbindung hergestellt. Vorteilhafterweise umfasst die eine Form eine Führungsschiene und die invertierte Form eine Rille, eine Nut und/oder Kerbe. Die Befestigungsmittel umfassen vorteilhafterweise eine Geometrieform, beispielsweise eine s-förmige Biegung, durch die eine besonders zugfeste und/oder druckbelastbare und/oder rüttelfeste Verbindung entsteht.

Die Verbindung zwischen den Halterungselementen und der Batteriezelle ist vorteilhafterweise formschlüssig, wodurch eine besonders gleichmäßige Wärmeabfuhr der Batteriezellen erfolgt.

Weitere vorteilhafte Ausführungsformen der vorliegenden Erfindung sind Gegenstand der Unteransprüche.

Vorteilhafterweise sind das erste Halterungselement und das zweite Halterungselement in einem rechten Winkel verbunden, wodurch eine besonders zugfeste und/oder druckbelastbare Verbindung entsteht.

Vorteilhafterweise umfasst die Halterung Anpressplatten, die eine Ausrichtung der Batteriezellen ermöglichen, und Abschlussplatten, die das Batteriemodul begrenzen und mit den Anpressplatten verbunden sind. Werden die Batteriezellen wie in herkömmlichen Batteriemodulen in Reihe angeordnet, wobei eine Berührung zwischen zwei Batteriezellen durch jeweils eine Stirnfläche der Batteriezellen erfolgt, dann ist die Anpressplatte entlang einer horizontalen Ausdehnung von Seitenflächen der Batteriezellen mit den Batteriezellen verbunden. Die Anpressplatten können entlang einer vertikalen Ausdehnung der Seitenflächen der Batteriezellen vollständig mit den Batteriezellen verbunden sein. Die Abschlussplatten sind mit den, von den anderen Batteriezellen abgewandten, Stirnflächen einer jeweils ersten Batteriezelle und einer letzten Batteriezelle eines Batteriemoduls verbunden. Ein Material der Abschlussplatte umfasst beispielsweise Kunststoff mit eingepressten Metallröhren, um eine größere Stabilität der Abschlussplatte zu erreichen.

Dabei wird mittels weiterer Befestigungsmittel der Anpressplatten vorzugsweise eine zusätzliche Verbindung zwischen den Anpressplatten und den Batteriezellen hergestellt, wobei durch die so entstehende Halterung ein besonders verwindungssteifes Batteriemodul entsteht und die Anpressplatten in der Art an den Batteriezellen fixiert sind, dass ein Abgleiten der Halterung verhindert wird.

Die Halterung der mindestens einen Batteriezelle umfasst mindestens zwei Halterungselemente mit Befestigungsmitteln, wobei die Halterungselemente mittels einer ersten Verbindungstechnik über die Befestigungsmittel miteinander verbunden werden, wobei vorteilhafterweise die Befestigungsmittel ineinander geschoben und/oder ineinander gesteckt und/oder ineinander geklipst sind. Auf diese Weise wird eine einfache Fertigungstechnik gegenüber einem herkömmlichen Schweißverfahren ermöglicht und gegenüber dem Stand der Technik leichtere Materialien, beispielsweise ein Kunststoff, verwendet werden, wodurch eine Gewichtsreduzierung des Batteriemoduls erreicht wird.

Vorteilhafterweise werden zur Herstellung der Halterung die mindestens zwei Halterungselemente mittels einer zweiten Verbindungstechnik miteinander verbunden, beispielsweise durch Schrauben, durch eine Schnappverbindung und/oder durch eine Pressverbindung, wobei durch die zusätzliche Verbindung vorteilhafterweise eine höhere Zugbelastung, Druckbelastung und/oder Verwindungssteife der Halterung und dadurch des Batteriemoduls erreicht wird.

Vorteilhafterweise umfasst ein Kraftfahrzeug mindestens ein Batteriemodul, das eine Halterung der mindestens einen Batteriezelle beinhaltet, wobei beispielsweise durch die rüttelfeste Verbindung der Batteriezellen durch die erfindungsgemäße Halterung eine geringere Ausfallwahrscheinlichkeit von Batteriemodulen erreicht wird, beispielsweise durch eine Reduzierung von losen Verbindungen und Beschädigungen an der Halterung, die durch Bewegungen bei Beschleunigungsvorgängen oder Rüttelbewegungen des Kraftfahrzeugs verursacht werden können.

Vorteilhafterweise werden für die mindestens zwei Halterungselemente Materialien verwendet, beispielsweise ein Leichtmetall wie Aluminium und/oder ein Kunststoff wie beispielsweise Polykarbonat, wodurch eine Gewichtsreduzierung des Batteriemoduls erreicht wird und somit beispielsweise eine Reichweite eines Elektrofahrzeugs verlängert wird.

### Kurzbeschreibung der Figuren

Ausführungsbeispiele der Erfindung sind in der Zeichnung dargestellt und in der nachfolgenden Beschreibung näher erläutert.

Es zeigt:
- Figur 1: eine Halterung mindestens einer Batteriezelle gemäß dem Stand der Technik;
- Figur 2: eine Ausführungsform der erfindungsgemäßen Halterung;
- Figur 3a: eine Ausführungsform einer ersten Verbindungstechnik; und
- Figur 3b, 3c: eine Ausführungsform eines Verfahren zur Herstellung einer Halterung.

### Detaillierte Beschreibung der Ausführungsbeispiele

Gleiche Bezugszeichen bezeichnen in allen Figuren gleiche Vorrichtungskomponenten.

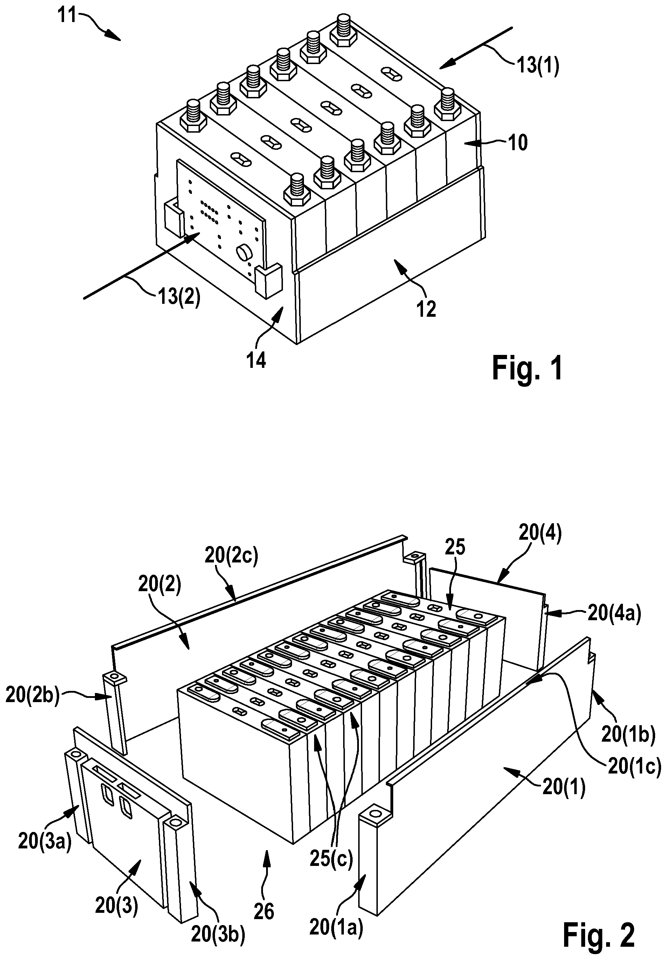

Figur 1 zeigt ein Batteriemodul 11 gemäß dem Stand der Technik mit beispielsweise sechs Batteriezellen 10, wobei zur Herstellung des Batteriemoduls 11 die Batteriezellen 10 unter Druck gegeneinander gepresst werden 13(1), 13(2) und eine Halterung 12 während des Gegeneinanderpressens um die Batteriezellen 10 befestigt wird. Die Halterung kann beispielsweise aus mehreren Halterungsteilen 12, 14 bestehen, die miteinander verschweißt sind. In Figur 1 weisen die Halterungsteile 12 und 14 eine unterschiedliche Höhe auf, beispielsweise zur Stabilisierung der Batteriezellen oder für eine Befestigung eines Steuergeräts an dem Batteriemodul 11.

Figur 2 zeigt ein Batteriemodul 26 mit zwölf Batteriezellen 25, die in Reihe mittels Zellverbindern miteinander elektrisch leitend verbunden sind. In der gezeigten Ausführungsform umfasst eine erfindungsgemäße Halterung vier Halterungselemente 20(1), 20(2), 20(3), 20(4), wobei die vier Halterungselemente 20(1), 20(2), 20(3), 20(4) zwei Anpressplatten 20(1), 20(2) und zwei Abschlussplatten 20(3), 20(4) umfassen. Die Anpressplatten 20(1), 20(2) bzw. die zwei Abschlussplatten 20(3), 20(4) umfassen Befestigungsmittel 20(la), 20(lb), 20(2b) bzw. 20(3a), 20(3b), 20(4a). In der gezeigten Ausführungsform umfassen die Befestigungsmittel 20(3a), 20(3b), 20(4a) jeweils eine Nut, die eine zu jeweils einer Führungsschiene der Befestigungsmittel 20(la), 20(lb), 20(2b) invertierte Form aufweist. So wird beispielsweise durch ein Ineinanderschieben einer Nut und einer Führungsschiene eine Verbindung zwischen der Anpressplatte 20(1), 20(2) und mindestens einer der Abschlussplatten 20(3), 20(4) erreicht. Die Anpressplatten 20(1), 20(2) umfassen ein weiteres Befestigungsmittel 20(lc), 20(2c) mit einer zu einem Befestigungsmittel 25(c) der Batteriezellen 25 invertierten Form, so dass zusätzliche eine Verbindung zwischen der Anpressplatte 20(1), 20(2) und den Batteriezellen 25 hergestellt wird, beispielsweise zur Stabilisierung der Anpressplatten 20(1), 20(2). Vorteilhafterweise sind die Befestigungsmittel 25(c) eine Rille an einer Oberseite der Batteriezellen 25 welche im Wesentlichen parallel zu den Anpressplatten 20(1), 20(2) verläuft.

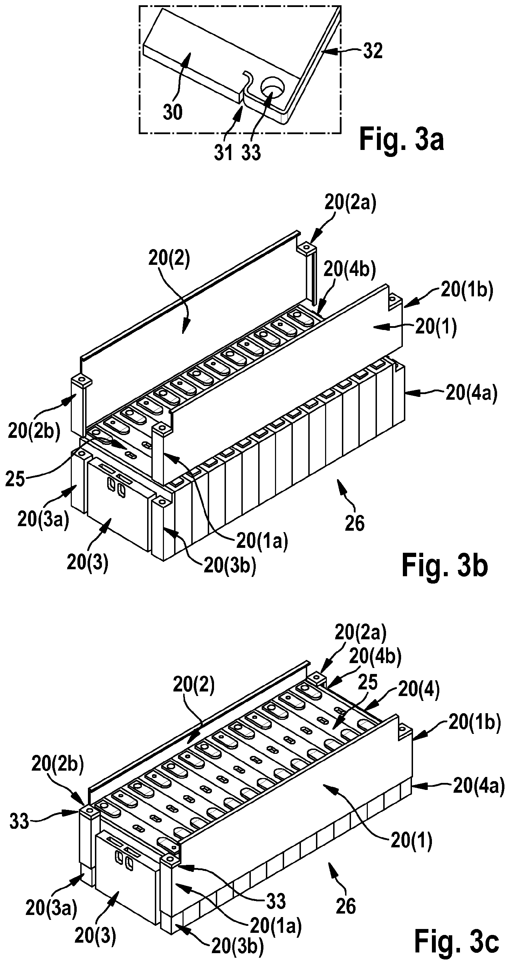

Figur 3a zeigt einen Ausschnitt 30 einer Abschlussplatte 20(3), 20(4), einen Ausschnitt 32 einer Anpressplatte 20(1), 20(2), einen Ausschnitt 31 eines Befestigungsmittels 20(1a), 20(lb), 20(2b), sowie einen Ausschnitt 33 eines weiteren Befestigungsmittels. In der gezeigten Ausführungsform umfasst das Befestigungsmittel 20(la), 20(lb), 20(2b) eine s-förmige Führungsschiene, wobei die s-förmige Führungsschiene mit einer s-förmige Nut der Befestigungsmittel 20(3a), 20(3b), 20(4a), miteinander verbunden sind, wobei die s-förmige Nut eine zu der s-förmigen Führungsschiene invertierte Form aufweist. Die Befestigungsmittel 20(3a), 20(3b), 20(4a) umfassen ein weiteres Befestigungsmittel mit einer Aussparung 33 für eine zweite Verbindungstechnik, beispielsweise durch Schrauben, durch eine Schnappverbindung und/oder durch eine Pressverbindung.

Die Figuren 3b und 3c zeigen ein Batteriemodul 26 mit zwölf Batteriezellen 25 vor (Figur 3b) bzw. nach (Figur 3c) einem Ineinanderschieben der Befestigungsmittel 20(la), 20(3b) bzw. 20(3a), 20(2b) bzw. 20(4a), 20(lb) bzw. 20(2a), 20(4b), wodurch eine Halterung entsteht, wobei durch eine Verbindung zwischen den Anpressplatten 20(1), 20(2) und den Abschlussplatten 20(3), 20(4) die Batteriezellen zu einem Batteriemodul 26 zusammengehalten werden. Die Halterung umschließt im Wesentlichen vollständig Stirnflächen und Seitenflächen der Batteriezellen (25) Mittels der mindestens einen Aussparung 33 können die Anpressplatten 20(1), 20(2) mit den Abschlussplatten 20(3), 20(4) beispielsweise verschraubt werden, wodurch eine stabilere Verbindung erreicht wird und/oder wodurch ein Auseinanderschieben der Anpressplatten 20(1), 20(2) und der Abschlussplatten 20(3), 20(4), beispielsweise durch Rüttelbewegungen des Fahrzeugs, verhindert wird.

## Patentansprüche

1. Halterung mindestens einer Batteriezelle (25), wobei die Halterung mindestens zwei Halterungselemente (20(1), 20(2), 20(3), 20(4)) umfasst, wobei jedes Halterungselement (20(1), 20(2), 20(3), 20(4)) mindestens ein Befestigungsmittel (20(la), 20(2a), 20(3a), 20(4a), 20(lb), 20(2b), 20(3b), 20(4b)) umfasst, **dadurch gekennzeichnet, dass** die mindestens zwei Halterungselemente ((20(1), 20(2), 20(3), 20(4))) mittels der Befestigungsmittel (20(la), 20(2a), 20(3a), 20(4a), 20(lb), 20(2b), 20(3b), 20(4b)) mechanisch lösbar verbunden sind, wobei erste Befestigungsmittel (20(la), 20(lb), 20(2a), 20(2b)) eine s-förmige Führungsschiene aufweisen, die einer invertierten Form, insbesondere einer im Wesentlichen s-förmigen Nut, zweiter Befestigungsmittel (20(3a), 20(3b), 20(4a), 20(4b) entsprechen, wobei die Verbindung zwischen den Halterungselementen (20(1), 20(2), 20(3), 20(4)) und der Batteriezelle (25) formschlüssig ist, wobei die Halterung Stirnflächen und Seitenflächen der mindestens einen Batteriezelle (25) im Wesentlichen vollständig umschließt.

2. Halterung nach einem der vorherigen Ansprüche, **dadurch gekennzeichnet, dass** ein erstes Halterungselement (20(1), 20(2), 20(3), 20(4)) und ein zweites Halterungselement (20(1), 20(2), 20(3), 20(4)) in einem rechten Winkel zueinander verbunden sind.

3. Batteriemodul (26) umfassend mindestens eine Batteriezelle (25) mit einer Halterung nach einem der Ansprüche 1 bis 3.

4. Kraftfahrzeug mit mindestens einem Batteriemodul (26) nach Anspruch 3.

5. Verfahren zur Herstellung einer Halterung mindestens einer Batteriezelle (25), wobei die Halterung mindestens zwei Halterungselemente (20(1), 20(2), 20(3), 20(4)) umfasst, wobei jedes Halterungselement (20(1), 20(2), 20(3), 20(4)) mindestens ein Befestigungsmittel (20(la), 20(2a), 20(3a), 20(4a), 20(lb), 20(2b), 20(3b), 20(4b)) umfasst, **dadurch gekennzeichnet, dass** die mindestens zwei Halterungselemente (20(1), 20(2), 20(3), 20(4)) mittels der Befestigungsmittel (20(la), 20(2a), 20(3a), 20(4a), 20(lb), 20(2b), 20(3b), 20(4b)) mittels einer Schiebetechnik verbunden werden, bei der die s-förmige Führungsschiene der Befestigungsmittel (20(la), 20(1b), 20(2a), 20(2b)) in die s-förmige Nut der Befestigungsmittel (20(3a), 20(3b), 20(4a), 20(4b)) für eine formschlüssige Verbindung ineinander geschoben werden, wobei die Halterung Stirnflächen und Seitenflächen der mindestens einen Batteriezelle (25) in Wesentlichen vollständig umschließt.

6. Verfahren nach einem der Ansprüche 5, **dadurch gekennzeichnet, dass** die Befestigungsmittel (20(1a), 20(2a), 20(3a), 20(4a), 20(1b), 20(2b), 20(3b), 20(4b)) der Halterungselemente (20(1), 20(2), 20(3), 20(4)) mittels einer zweiten Verbindungstechnik miteinander verbunden werden, wobei die zweite Verbindungstechnik Mittel für eine Verriegelung der Befestigungsmittel (20(la), 20(2a), 20(3a), 20(4a), 20(lb), 20(2b), 20(3b), 20(4b)) und/oder eine Verschraubung der Befestigungsmittel (20(la), 20(2a), 20(3a), 20(4a), 20(1b), 20(2b), 20(3b), 20(4b)) der Halterungselemente (20(1), 20(2), 20(3), 20(4)) umfasst.

## Claims

1. Retaining device for at least one battery cell (25), wherein the retaining device comprises at least two retaining elements (20(1), 20(2), 20(3), 20(4)), wherein each retaining element (20(1), 20(2), 20(3), 20(4)) comprises at least one fastening means (20(1a), 20(2a), 20(3a), 20(4a), (20(1b), 20(2b), 20(3b), 20(4b)), **characterized in that** the at least two retaining elements ((20(1), 20(2), 20(3), 20(4))) are connected in a mechanically releasable manner by means of the fastening means (20(la), 20(2a), 20(3a), 20(4a), 20(lb), 20(2b), 20(3b), 20(4b)), wherein first fastening means (20(1a), 20(1b), 20(2a), 20(2b)) have an s-shaped guide rail which corresponds to an inverted form, in particular to a substantially s-shaped groove, of second fastening means (20(3a), 20(3b), 20(4a), 20(4b)), wherein the connection between the retaining elements (20(1), 20(2), 20(3), 20(4)) and the battery cell (25) is a positive-locking connection, wherein the retaining device substantially completely surrounds end faces and side faces of the at least one battery cell (25).

2. Retaining device according to any one of the preceding claims, **characterized in that** a first retaining element (20(1), 20(2), 20(3), 20(4)) and a second retaining element (20(1), 20(2), 20(3), 20(4)) are connected one to the other at a right angle.

3. Battery module (26) comprising at least one battery cell (25) having a retaining device according to any one of Claims 1 to 2.

4. Motor vehicle having at least one battery module (26) according to Claim 3.

5. Method for producing a retaining device for at least one battery cell (25), wherein the retaining device comprises at least two retaining elements (20(1), 20(2), 20(3), 20(4)), wherein each retaining element (20(1), 20(2), 20(3), 20(4)) comprises at least one fastening means (20(la), 20(2a), 20(3a), 20(4a), 20(lb), 20(2b), 20(3b), 20(4b)), **characterized in that** the at least two retaining elements (20(1), 20(2), 20(3), 20(4)) are connected by means of fastening means (20(1a), 20(2a), 20(3a), 20(4a), 20(1b), 20(2b), 20(3b), 20(4b)) by means of a pushing technique, wherein the s-shaped guide rail of the fastening means (20(1a), 20(1b), 20(2a), 20(2b)) into the s-shaped groove of the fastening means (20(3a), 20(3b), 20(4a), 20(4b)) are pushed one inside the other so as to produce a positive-locking connection, wherein the retaining device substantially completely surrounds end faces and side faces of the at least one battery cell (25) .

6. Method according to Claim 5, **characterized in that** the fastening means (20(1a), 20(2a), 20(3a), 20(4a), 20(1b), 20(2b), 20(3b), 20(4b)) of the retaining elements (20(1), 20(2), 20(3), 20(4)) are connected one to the other by means of a second connection technique, wherein the second connection technique comprises means for locking the fastening means (20(la), 20(2a), 20(3a), 20(4a), 20(1b), 20(2b), 20(3b), 20(4b)) and/or for screwing the fastening means (20(la), 20(2a), 20(3a), 20(4a), 20(lb), 20(2b), 20(3b), 20(4b)) of the retaining elements (20(1), 20(2), 20(3), 20(4)).

## Revendications

1. Support d'au moins une cellule de batterie (25), dans lequel le support comprend au moins deux éléments de support (20(1), 20(2), 20(3), 20(4)), dans lequel chaque élément de support (20(1), 20(2), 20(3), 20(4)) comprend au moins un moyen de fixation (20(la), 20(2a), 20(3a), 20(4a), 20(1b), 20(2b), 20(3b), 20(4b)), **caractérisé en ce que** lesdits au moins deux éléments de support (20(1), 20(2), 20(3), 20(4)) sont assemblés mécaniquement de façon séparable au moyen des moyens de fixation (20(la), 20(2a), 20(3a), 20(4a), 20(1b), 20(2b), 20(3b), 20(4b)), dans lequel des premiers moyens de fixation (20(1a), 20(1b), 20(2a), 20(2b)) présentent un rail de guidage en forme de S, qui correspond à une forme inversée, en particulier à une rainure essentiellement en forme de S, de deuxièmes moyens de fixation (20(3a), 20(3b), 20(4a), 20(4b)), dans lequel l'assemblage entre les éléments de support (20(1), 20(2), 20(3), 20(4)) et la cellule de batterie (25) est réalisé par emboîtement, dans lequel le support entoure essentiellement entièrement des faces frontales et des faces latérales de ladite au moins une cellule de batterie (25).

2. Support selon l'une des revendications précédentes, **caractérisé en ce qu'**un premier élément de support (20(1), 20(2), 20(3), 20(4)) et un deuxième élément de support (20(1), 20(2), 20(3), 20(4)) sont assemblés à angle droit l'un par rapport à l'autre.

3. Module de batterie (26) comprenant au moins une cellule de batterie (25) avec un support selon l'une quelconque des revendications 1 à 2.

4. Véhicule automobile avec au moins un module de batterie (26) selon la revendication 3.

5. Procédé de fabrication d'un support d'au moins une cellule de batterie (25), dans lequel le support comprend au moins deux éléments de support (20(1), 20(2), 20(3), 20(4)), dans lequel chaque élément de support (20(1), 20(2), 20(3), 20(4)) comprend au moins un moyen de fixation (20(la), 20(2a), 20(3a), 20(4a), 20(1b), 20(2b), 20(3b), 20(4b)), **caractérisé en ce que** lesdits au moins deux éléments de support (20(1), 20(2), 20(3), 20(4)) sont assemblés au moyen des moyens de fixation (20(la), 20(2a), 20(3a), 20(4a), 20(1b), 20(2b), 20(3b), 20(4b)) au moyen d'une technique de coulissement, dans laquelle on glisse l'un dans l'autre le rail de guidage en forme de S des moyens de fixation (20(la), 20(1b), 20(2a), 20(2b)) dans la rainure en forme de S des moyens de fixation (20(3a), 20(3b), 20(4a), 20(4b)) pour un assemblage par emboîtement, dans lequel le support entoure essentiellement entièrement des faces frontales et des faces latérales de ladite au moins une cellule de batterie (25).

6. Procédé selon la revendication 5, **caractérisé en ce que** les moyens de fixation (20(la), 20(2a), 20(3a), 20(4a), 20(1b), 20(2b), 20(3b), 20(4b)) des éléments de support (20(1), 20(2), 20(3), 20(4)) sont assemblés les uns aux autres au moyen d'une deuxième technique d'assemblage, dans lequel la deuxième technique d'assemblage comprend des moyens pour un verrouillage des moyens de fixation (20(la), 20(2a), 20(3a), 20(4a), 20(1b), 20(2b), 20(3b), 20(4b)) et/ou un assemblage vissé des moyens de fixation (20(la), 20(2a), 20(3a), 20(4a), 20(1b), 20(2b), 20(3b), 20(4b)) des éléments de support (20(1),20(2),20(3),20(4)).
